# EUROPÄISCHE PATENTSCHRIFT

(11) **EP 0 519 164 B1**
(45) Veröffentlichungstag und Bekanntmachung des Hinweises auf die Patenterteilung: **13.09.1995**
(21) Anmeldenummer: 92104543.1
(22) Anmeldetag: 17.03.1992
(51) Int. Cl.: F16H 55/30, B62M 9/00

(54) **Kettenrad**
Chain wheel
Roue à chaînes

(30) Priorität: 18.06.1991 DE 4119981
(43) Veröffentlichungstag der Anmeldung: 23.12.1992
(73) Patentinhaber: Firma Carl Freudenberg, 69469 Weinheim (DE)
(72) Erfinder: Langhof, Rolf, W-6050 Offenbach (DE); Schütz, Michael, W-6149 Rimbach (DE); Kohl, Hans-Kurt, W-6946 Gorxheimertal (DE)

(56) Entgegenhaltungen:
- AT-B- 330 525
- DE-A- 2 824 104
- DE-A- 3 001 964
- DE-C- 821 304
- DE-C- 1 028 847
- FR-A- 1 186 486

## Beschreibung

Die Erfindung betrifft ein Kettenrad, umfassend einen Grundkörper mit zylindrischer Außenfläche und ein die Außenfläche in radialer Richtung überragendes Kettenritzel, wobei auf der Außenfläche zumindest ein Ring aus polymerem Werkstoff festgelegt ist.

Ein Kettenrad nach dem Oberbegriff des Anspruche 1 ist aus der FR-A-1 186 486 bekannt. Das Kettenrad weist zur Gräuschminderung elastische Ringe aus polymerem Werkstoff auf, die auf die Mantelfläche des Kettenrads vulkanisiert sind. Die Verbindungslaschen der Ketten liegen während der bestimmungsgemäßen Verwendung auf den elastischen Ringen auf.

Kettenräder gelangen beispielsweise zum Antrieb obenliegender Nockenwellen in Verbrennungskraftmaschinen zur Anwendung. Die obenliegende Nockenwelle mit dem angeflanschten Kettenrad steht über zumindest eine Kette mit einem weiteren Kettenrad, das direkt an der Kurbelwelle festgelegt ist, in Verbindung. Die Ketten und die Kettenräder laufen im Kurbelgehäuse und werden durch Spritzdüsen mit Öl geschmiert. Kettenräder gelangen außerdem beispielsweise in einer Vielzahl von Getrieben zur Anwendung. Bei den bisher bekannten Ausführungsformen ist allerdings die erhebliche Geräuschentwicklung während der bestimmungsgemäßen Verwendung, insbesondere bei mit vergleichsweise hohen Drehzahlen rotierenden Kettenrädern, wie beispielsweise zum Antrieb von Nockenwellen, von Nachteil. Dieser Nachteil soll oftmals durch Zahnriemenantriebe kompensiert werden, wobei die Gebrauchseigenschaften während einer langen Gebrauchsdauer bei Zahnriemenantrieben wenig befriedigend sind.

Der Erfindung liegt die Aufgabe zugrunde, ein kettenrad der eingangs genannten Art derart weiter zuentwickeln, daß sich sowohl optimale Gebrauchseigenschaften während einer langen Gebrauchsdauer ergeben als auch ein optimales Betriebsverhalten bei wesentlich reduzierter Geräuschentwicklung.

Diese Aufgabe wird erfindungsgemäß mit den Merkmalen von Patentanspruch 1 gelöst. Auf vorteilhafte Ausgestaltungen nehmen die Unteransprüche Bezug.

Bei dem erfindungsgemäßen Kettenrad ist es vorgesehen, daß der Ring als Schrumpfring ausgebildet und durch Erwärmung auf der Außenfläche festlegbar ist und daß der Schrumpfring derart angebracht ist, daß über das Kettenrad laufende Kettenglieder eine metallische Berührung mit dem Kettenrad nur im Bereich der muldenförmigen Kettenritzel aufweisen. Hierbei ist von Vorteil, daß die über das Kettenrad laufenden Kettenglieder der um das Kettenrad gelegten Kette eine metallische Berührung mit diesem nur im Bereich der muldenförmigen Kettenritzel aufweisen. Die Außenstege, die senkrecht zu den Querstegen angeordnet sind und die Zähne des Kettenritzels in axialer Richtung außenseitig umschließen, berühren mit zunehmender Belastung der Kette den polymeren Werkstoff, der thermisch auf die Außenfläche des Grundkörpers aufgeschrumpft ist. Dadurch werden die Querstege der Kette allmählich und in gedämpfter Form in die muldenförmige Vertiefung des Kettenritzels gezogen, wodurch sich eine wesentliche Reduzierung der Geräuschentwicklung während der bestimmungsgemäßen Verwendung bei ausgezeichneten Gebrauchseigenschaften über eine lange Gebrauchsdauer ergibt.

Der polymere Werkstoff kann aus einem Blockpolymer bestehen, das einen Gehalt an einem Polyolefin und einem elastomeren Werkstoff aufweist. Ein derartiger Werkstoff eignet sich besonders gut zur Herstellung von Schrumpfringen. Die Schrumpfringe weisen eine große Dehnbarkeit in radialer Richtung auf, werden zur Montage in axialer Richtung über den Grundkörper geführt und durch Erwärmung an diesem festgelegt. Bedenken hinsichtlich der Haltbarkeit des Schrumpfringes sind wegen der Belastung im wesentlichen in radialer Richtung, also auf Druck, unbegründet.

Außerdem können der Schrumpfring und die zylindrische Außenfläche adhäsiv verbunden sein. Daraus ergibt sich eine zusätzliche Sicherheit gegen Bewegungen des Schrumpfringes auf der zylindrischen Außenfläche des Grundkörpers sowohl in axialer Richtung als auch in Umfangsrichtung. Der Schrumpfring kann beispielsweise auf die Außenfläche aufgeklebt werden, wodurch sich im Vergleich zu aufvulkanisierten Dämpfungsringen auf die Außenfläche des Grundkörpers eine wesentlich wirtschaftlichere Herstellbarkeit ergibt.

Das Kettenrad der vorliegenden Erfindung wird nachfolgend anhand der Zeichnungen weiter erläutert. Diese zeigen, teilweise in schematischer Darstellung,
- in Figur 1: eine Einzelteilzeichnung des Kettenrades in einer Ansicht,
- in Figur 2: das Kettenrad entlang des Schnittes A-A gemäß Figur 1,
- in Figur 3: das Kettenrad gemäß der Figuren 1 und 2, angeflanscht an eine Welle und eine Steuerkette aufnehmend sowie eine schematisch dargestellte Steuerkette,
- in Figur 4 bis Figur 8: jeweils ein Kettenrad in längsgeschnittener Darstellung.

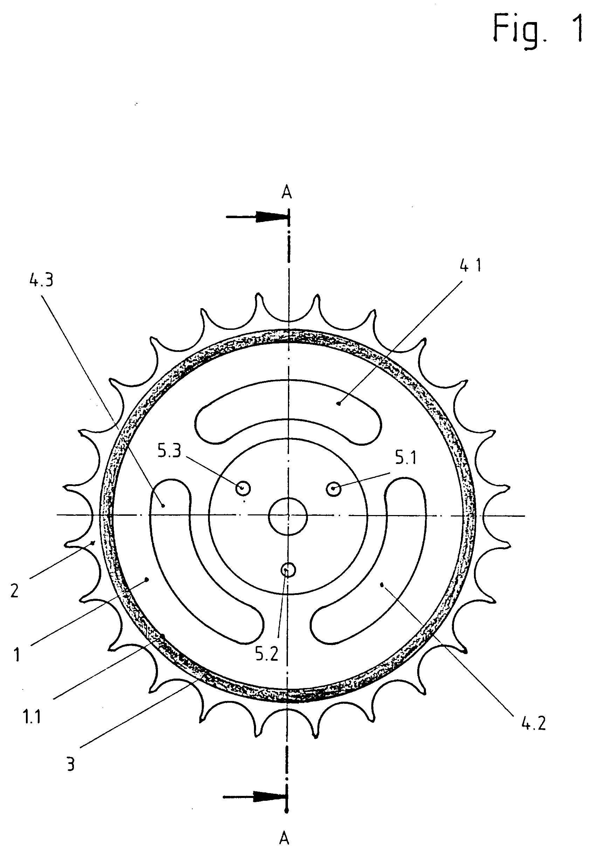

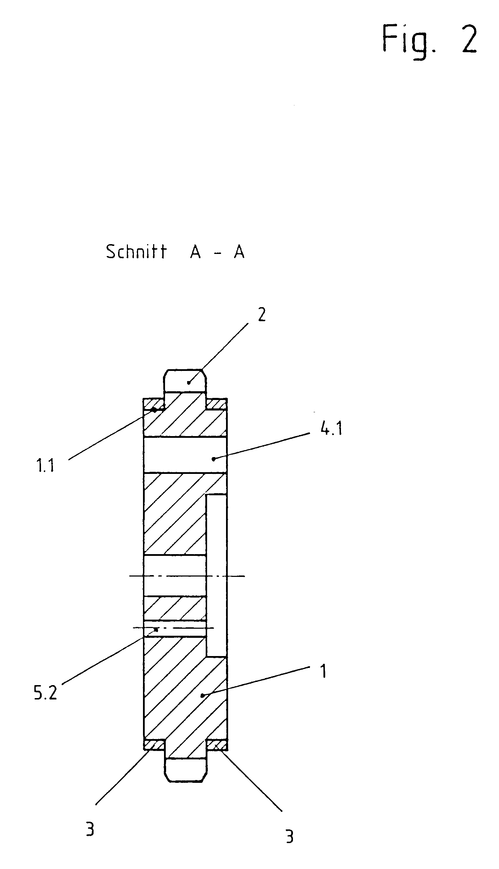

In den Figuren 1 und 2 ist ein Kettenrad dargestellt, das aus einem Grundkörper 1 besteht. Der Grundkörper 1 weist zylindrische Außenflächen 1.1 auf, wobei ein Kettenritzel 2 die Außenflächen 1.1 in radialer Richtung überragt. Auf den Außenflächen 1.1 ist jeweils ein Schrumpfring 3 aus polymerem Werkstoff angeordnet. Die Schrumpfringe 3 werden durch Erwärmung mit den Außenflächen 1.1 kraftschlüssig verbunden. Außerdem besteht die Möglichkeit, die Schrumpfringe 3 mit den zylindrischen Außenflächen 1.1 adhäsiv zu verbinden.

Zur Verringerung der Masse kann das Kettenrad Ausnehmungen 4.1, 4.2, 4.3 aufweisen, die beispielsweise gleichmäßig in Umfangsrichtung verteilt sind. Des weiteren kann das Kettenrad mehrere Verdrehsicherungen 5.1, 5.2, 5.3 beispielsweise in Form von zumindest einer Keilnut und mehreren Arretierbohrungen aufweisen, die die unverdrehbare Zuordnung an einer hier nicht dargestellten Welle, beispielsweise einer Nockenwelle, ermöglichen. Bei dieser Ausgestaltung handelt es sich lediglich um ein Beispiel. Weitere kraftschlüssige Verbindungen zwischen dem Kettenrad und einer Welle können beispielsweise auch durch Polygonprofile, Keilwellen oder sonstige kraft-/formschlüssige Verbindungen erfolgen.

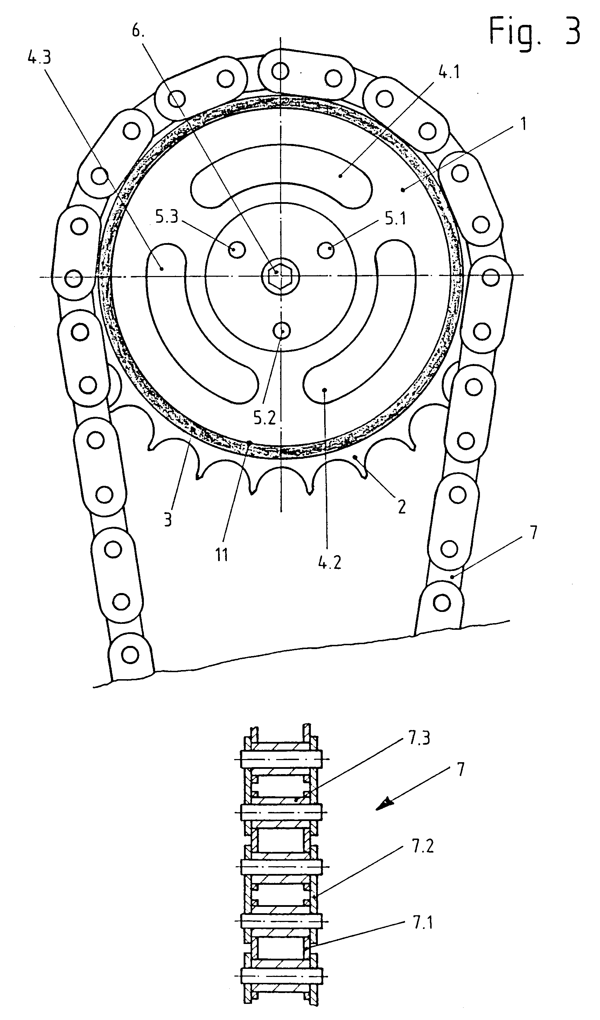

In Figur 3 ist das vorstehend beschriebene Kettenrad dargestellt, das beispielsweise mittels einer Verdrehsicherung und einer Schraube 6 an einer hier nicht dargestellten Welle angeflanscht ist. Die Verdrehsicherungen 5.1 bis 5.3 fixieren das Kettenrad in seiner Lage zur angrenzenden Welle. Die Kette 7, die in dieser Zeichnung schematisch dargestellt ist, kann als Hülsen- oder als Rollenkette ausgebildet sein. Auch Doppel- oder Mehrfachausführungen von Kettenritzel mit aufgelegter Kette sind hier denkbar. Der wesentliche Vorteil der Erfindung ist darin zu sehen, daß die Geräusche während der bestimmungsgemäßen Verwendung des erfindungsgemäßen Kettenrades wesentlich reduziert sind. Durch den Schrumpfring aus polymerem Werkstoff, der thermisch auf die Außenfläche des Grundkörpers aufgeschrumpft ist, gelangt die Kette allmählich, durch den polymeren Werkstoff gedämpft, mit den muldenförmigen Ausnehmungen des Kettenritzels in Berührung. Die inneren 7.1 und äußeren Kettenverbindungsglieder 7.2 liegen auf dem Schrumpfring 3 aus polymerem Werkstoff auf, was eine deutliche Verringerung der Geräuschentwicklung während der bestimmungsgemäßen Verwendung bedingt.

In dem hier dargestellten Beispiel sind der Grundkörper 1 mit seinen Außenflächen 1.1 und das Kettenritzel 2 einstückig ausgebildet. Eine zweistückige Ausbildung von Grundkörper und Kettenritzel ist aber ebenfalls denkbar, wobei das Kettenritzel beispielsweise auf den Grundkörper aufgeschrumpft sein kann. Die zweiteilige Ausführung weist, nachdem ein Schrumpfring auf die Außenflächen aufgebracht ist, die gleichen vorteilhaften Eigenschaften auf, wie die bisher dargestellten Ausführungsbeispiele. Auch mehrere, auf einem Grundkörper in axialer Richtung nebeneinander angeordnete Kettenritzel weisen bei aufgeschrumpftem Schrumpfring die vorteilhaften Eigenschaften des erfindungsgemäßen Kettenrades auf.

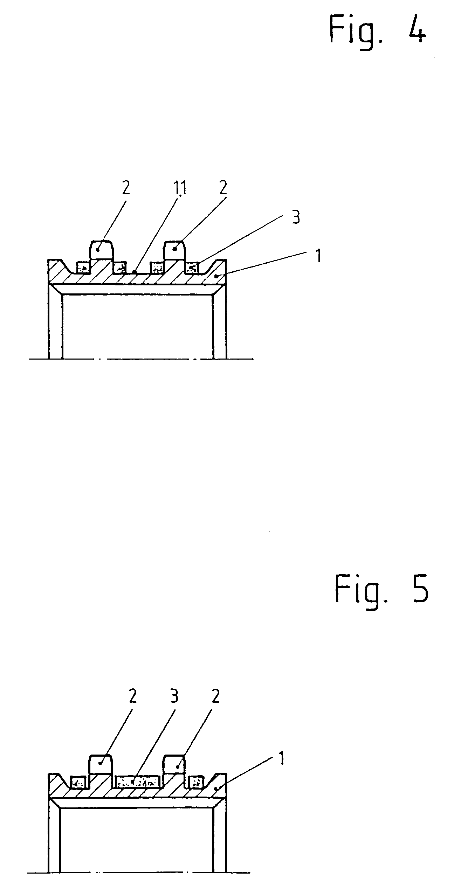

In den Figuren 4 bis 8 sind weitere Ausführungsbeispiele der Erfindung dargestellt. Die Beispiele unterscheiden sich durch die Anzahl der in axialer Richtung einander benachbarten Kettenritzel 2 und die Anbringung der Schrumpfringe 3 auf den Außenflächen 1.1 der Grundkörper 1. In den Figuren 4 und 5 sind die Schrumpfringe 3 auf der im wesentlichen ebenen Außenfläche 1.1 des Grundkörpers 1 festgelegt.

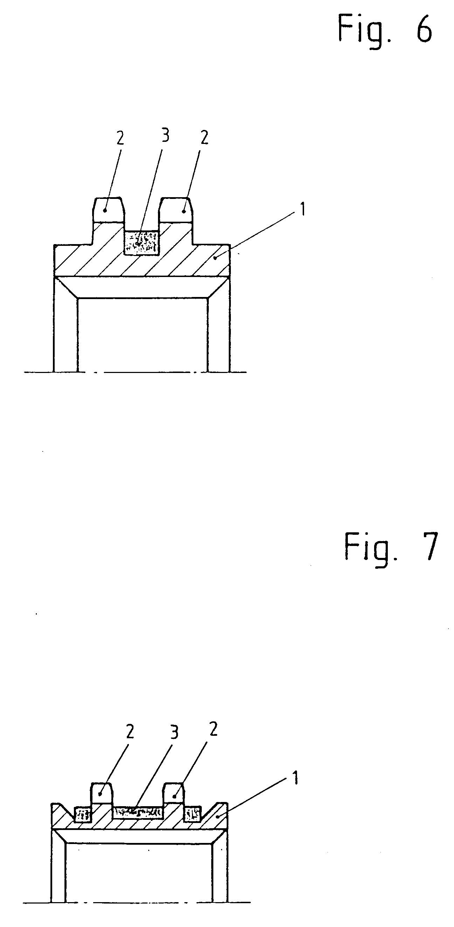

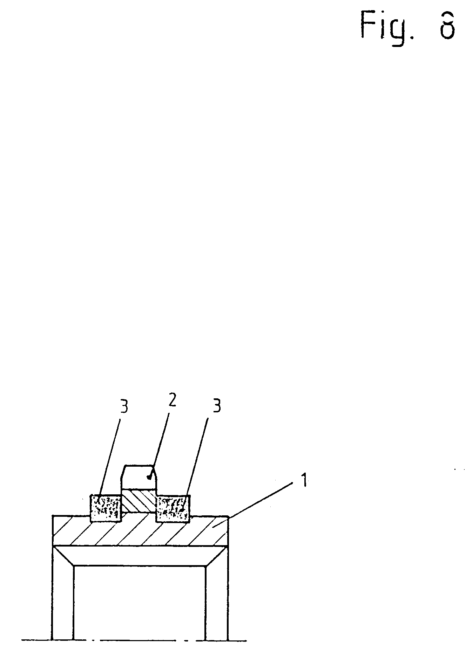

In den Figuren 6 und 7 sind die Schrumpfringe 3 in Ausnehmungen des Grundkörpers 1 angeordnet. Diese Anordnung gewährleistet eine zusätzliche Sicherheit gegen Verschiebungen der Schrumpfringe 3 in axialer Richtung. Eine besonders einfache und in wirtschaftlicher Hinsicht günstige Variante des erfindungsgemäßen Kettenritzels stellt Figur 6 dar. Nur zwischen den beiden Kettenritzeln ist ein Schrumpfring 3 aus polymerem Werkstoff angeordnet. Auch bei dieser Ausgestaltung sind die Vorteile der Erfindung gegeben. In Figur 8 ist das Kettenritzel 2 auf den Grundkörper 1 aufgeschrumpft. Zur Fixierung der Schrumpfringe 3 aus polymerem Werkstoff in axialer Richtung sind im Grundkörper 1 Ausnehmungen angeordnet. Auch diese Ausführung weist die vorteilhaften Eigenschaften der Erfindung auf.

## Patentansprüche

1. Kettenrad, umfassend einen Grundkörper (1) mit zylindrischer Außenfläche (1.1) und ein die Außenfläche (1.1) in radialer Richtung überragendes Kettenritzel (2), wobei auf der Außenfläche (1.1) zumindest ein Ring aus polymerem Werkstoff festgelegt ist, der derart angebracht ist, daß über das Kettenrad laufende Kettenglieder (7.1, 7.2, 7.3) eine metallische Berührung mit dem Kettenrad nur im Bereich der muldenförmigen Kettenritzel (2) aufweisen, dadurch gekennzeichnet, daß der Ring als Schrumpfring (3) ausgebildet ist und durch Erwärmung auf der Außenfläche (1.1) aufgeschrumpft ist.

2. Kettenrad nach Anspruch 1, dadurch gekennzeichnet, daß der polymere Werkstoff aus einem Blockpolymer besteht, das einen Gehalt an einem Polyolefin und einem elastomeren Werkstoff aufweist.

3. Kettenrad nach Ansprüchen 1 bis 2, dadurch gekennzeichnet, daß der Schrumpfring (3) und die zylindrische Außenfläche (1.1) adhäsiv verbunden sind.

## Claims

1. A chain wheel, comprising a basic body (1) with a cylindrical outer surface (1.1) and a chain pinion (2) which projects beyond the outer surface (1.1) in the radial direction, at least one ring of polymer material being fastened on the outer surface (1.1), which ring is mounted in such a way that chain links (7.1, 7.2, 7.3) running over the chain wheel have a metallic contact with the chain wheel only in the region of the trough-shaped chain pinion (2), characterized in that the ring is designed as a shrink ring (3) and is shrunk on the outer surface (1.1) by heating.

2. A chain wheel according to claim 1, characterized in that the polymer material is composed of a block polymer which has a content of a polyolefin and an elastomeric material.

3. A chain wheel according to either of claims 1 and 2, characterized in that the shrink ring (3) and the cylindrical outer surface (1.1) are connected adhesively.

## Revendications

1. Roue à chaînes comprenant un corps de base (1) pourvu d'une surface externe (1.1) cylindrique et d'un pignon de chaîne (2) qui dépasse la surface externe (1.1) dans la direction radiale, au moins une bague en matière polymère étant fixée sur la surface externe (1.1), cette bague étant fixée de manière à ce que des maillons (7.1, 7.2, 7.3) passant sur la roue à chaînes aient un contact métallique avec cette dernière uniquement dans la zone du pignon de chaîne (2) en auge, caractérisée en ce que la bague en tant que bague de serrage (3) est posée à chaud sur la surface externe (1.1).

2. Roue à chaînes selon la revendication 1, caractérisée en ce que la matière polymère est constituée d'un polymère en masse qui contient une polyoléfine et une matière élastomère.

3. Roue à chaînes selon les revendications 1 à 2, caractérisée en ce que la bague de serrage (3) et la surface externe (1.1) cylindrique sont liées de manière adhésive.
